# EUROPEAN PATENT SPECIFICATION

(11) **EP 1 857 836 B1**
(45) Date of publication and mention of the grant of the patent: **21.10.2009**
(21) Application number: 06290797.7
(22) Date of filing: 15.05.2006
(51) Int. Cl.: G01T 1/203, G01T 1/22, G01T 1/29

(54) **Device and method for discriminating cerenkov and scintillation radiation**
Vorrichtung und Methode zur Unterscheidung von Cerenkovstrahlung und Szintillationsstrahlung
Dispositif et procédé pour distinguer de radiation Cerenkov et des radiations scintillantes

(43) Date of publication of application: 21.11.2007
(73) Proprietor: ELDIM SA, 14200 Herouville Saint-Clair (FR)
(72) Inventor: Boher, Pierre, 14114 Ver Sur Mer (FR); Leroux, Thierry, 1400 Caen (FR)
(74) Representative: Grünecker, Kinkeldey, Stockmair & Schwanhäusser Anwaltssozietät

(56) References cited:
- DE-A1- 19 723 445
- JP-A- 58 148 982
- US-A1- 2004 178 361
- US-A1- 2004 238 749
- FRELIN A-M ET AL: "Spectral discrimination of Cerenkov radiation in scintillating dosimeters" MEDICAL PHYSICS, AIP, MELVILLE, NY, US, vol. 32, no. 9, 30 August 2005 (2005-08-30), pages 3000-3006, XP012075472 ISSN: 0094-2405

## Description

The invention relates to a device for discriminating Cerenkov and scintillation radiation and a beam inspection device comprising the same. Furthermore, the invention also relates to a method for discriminating Cerenkov and scintillation radiation using a discriminating device or a beam inspection device according to the invention.

The invention relates to inspecting ionizing beams, particularly in the field of the adjustment and control of medical equipment such as radiotherapy devices.

In radiotherapy, ionizing radiation, such as X-ray, β, or γ radiation, is used to destroy tumor cells of a patient. During the irradiation of the cancerous tissues, it is, however, unavoidable to expose healthy tissue at the same time. To optimize the radiation dose, the propagation of the radiation is modeled. As, however, the radiation dose to which a patient is going to be exposed depends on many different parameters such as wavelengths used, intensity or beam directions, the model calculations are supported by beam inspection devices which analyze the dose distribution of an ionizing radiation source in a phantom modeling a patient.

Various types of beam inspection devices, also called dosimeters, are known in the art. Commonly used dosimeters work with scintillators to measure the irradiation dose. In the scintillator, the radiation dose received is transformed into light which is then detected by conventional means.

US 2004-0178361 discloses such a device and method for inspecting an ionizing radiation beam. Such a device comprises an inspection head comprising a scintillator plate and at least one ionizing radiation diffuser block connected to the scintillator. Furthermore, means are provided for forming an image of the inspection head. The dose profile and/or depth dose of the beam can then be determined from the signal obtained by the imaging means.

Such a device allows a 2D and 3D analysis of the ionizing radiation beam. Similar devices using scintillators are known from US 2004-0238749, US 6998604 and US 6594336.

Devices comprising scintillators suffer from the problem that not only light created by the scintillator based on the ionizing radiation provided by a radiation source is detected, but also parasitic Cerenkov light, created in the diffuser block of the inspection head is collected by the imaging system, so that the measured intensity does not reflect the radiation dose. To overcome this problem, so far, it is has been proposed to use scintillation radiation of a wavelength region in which the Cerenkov radiation is less important - Cerenkov radiation has an inverse square of the wavelength proportionality - in combination with filters.

US 2004-0238749 discloses to use an optical fiber and two different filters to calculate the quantity of Cerenkov radiation in the measured intensity. US 2004-0178361 discloses the use of a plurality of different filters and to take for each filter a different image. These discrimination solutions are nevertheless still not satisfying:

In the US 2004-0238749, the 2D or 3D measurements cannot be carried out and the solution of the US 2004-0178361 needs a plurality of images to enable the discrimination between Cerenkov radiation and scintillation radiation.

DE 197 23 445 A1 discloses a depth dose measuring device with alternatively arranged normal optical fibers and scintillating optical fibers. Protective films are arranged such that a measuring device to the one side of the periodically arranged fibers only measures scintillation radiation whereas a second measuring device positioned on the opposite side only measures light coming from the optical fibers. The two images are then subtracted from each other to obtain a depth dose measurement.

Starting therefrom, it is therefore the object of the present invention to provide a beam inspection device allowing 2D/3D dosimetry without having to use a plurality of images. It is also the object of the present invention to provide a corresponding method for discriminating Cerenkov and scintillation radiation.

This object is achieved with the beam inspection device according to claim 1.

In this context, Cerenkov radiation corresponds to parasitic radiation and which is associated with charged atomic particles moving at velocities higher than the speed of light in the local medium. The charged particles are created by the ionising radiation. In the beam inspection devices or dosimeters, the Cerenkov radiation is created in the scintillator and/or the diffuser block. Cerenkov radiation emits under all angles and at all frequencies in the visible spectrum, when it occurs in an optically transparent medium. The energy per unit wavelength of the Cerenkov radiation is proportional to the inverse square of the wavelength.

Furthermore, in this context, scintillator radiation is attributed to the radiation provided by the scintillator which can be a part of a beam inspection device or dosimeter. The spectrum of the scintillator radiation depends on the scintillator material used. The term "ionizing radiation" relates to radiation of high energy, such as X, β, or γ radiation which is for example provided by an accelerator.

Due to the fact that the absorption properties for the two different kinds of filters are different concerning the two types of radiation, and due to the fact that the filters are regularly arranged, the radiation having passed the filters will present a spatially modulated amplitude, the properties of which can be exploited to extract the scintillation radiation intensity from the ionizing radiation and as a consequence from the spurious Cerenkov radiation contribution. As the necessary modulation information can be obtained by analyzing the spatial intensity distribution of radiation having past the two types of filters, it is furthermore sufficient to take only one image.

The first filters are transparent and the second filters opaque to scintillation radiation. This facilitates the extraction of the scintillation radiation signal out of the measured intensity modulation.

The first and second filter are both transparent to the ionizing radiation. In this case, in each point of an image taken of a radiation beam comprising scintillation radiation which has passed the first and second filters, and which correspond to the position of the first filter, the light intensity is the sum of two contributions: the scintillation radiation and Cerenkov radiation created as a consequence of the ionizing radiation which has passed the inventive device. In contrast thereto, each point of the image corresponding to the second filters has a unique contribution, which is the light intensity arising from Cerenkov radiation only (which again is the consequence of ionizing radiation having passed the second filters). This clear attribution to the two types of radiation makes the analysis even simpler and therefore the extraction of the scintillation radiation is improved.

The device for discriminating Cerenkov and scintillation radiation as described above being part of the beam inspection device, the same advantageous effect can be obtained. The device for discriminating Cerenkov and scintillation radiation is positioned between the scintillator and the imaging system. Thus, the imaging system detects the modulated intensity in case the beam inspection device is irradiated with ionizing radiation.

Preferably, the first and second filters are arranged in the form of a checkerboard. Such an arrangement of the first and second filters allows the discrimination between Cerenkov radiation and scintillation radiation in two dimensions.

Advantageously, the device for discriminating Cerenkov and scintillation radiation can comprise a first layer, in particular a plastic sheet, more specifically a polystyrene Plexiglas sheet, and a second layer comprising regions forming the second filters. Such a structure is easy to realize and therefore cost effective. In fact, the first layer will form the first filters in those regions where the second filters are not present.

Preferably, the regions can be square formed having the advantage that the signal modulation dependency will be the same in the two dimensions.

According to a preferred embodiment, the regions can be made out of black ink. Black ink has the desired properties of being opaque to scintillation radiation, but being transparent to higher energy ionizing radiation. Furthermore, using standard printing technology, the periodically arranged regions can be easily realized.

According to an advantageous embodiment, the device for discriminating Cerenkov and scintillation radiation can further comprise a signal analyzing means configured to extract the scintillation radiation contribution out of a signal comprising scintillation and Cerenkov radiation, in particular based on a Fourier transform algorithm. Due to the fact that the first and second filters are periodically arranged, the properties of Fourier transformation can be advantageously applied. Indeed, the amplitude of the signal modulation between the first and second filters can be deduced in each point of the image, wherein the modulation amplitude will correspond to the scintillation light intensity cleared from the Cerenkov contribution in case the first and second filters are transparent to ionizing radiation, whereas the first filter is transparent to scintillation radiation but the second filter opaque to scintillation radiation.

Preferably, the device for discriminating Cerenkov and scintillation radiation can be positioned between the scintillator and the ionizing radiation diffuser block, arranged between the scintillator and the imaging system. By doing so, the Cerenkov radiation created in the ionizing radiation diffuser block can be filtered out. To prevent Cerenkov radiation originating from a diffuser block positioned between the radiation source, which is outside the beam inspection device, and the discriminating device the interface between this diffuser block and the scintillator can be painted black such that Cerenkov radiation is blocked on its way to the imaging device.

Advantageously, the beam inspection device can further comprise an anti-re-excitation filter between the scintillator and the ionizing radiation diffuser block, arranged between the scintillator and the imaging system and which is configured to absorb partially Cerenkov radiation generated in the diffuser block. By doing so, it is prevented that Cerenkov light, produced in the diffuser block and being emitted in all directions can reach the scintillator which can have the effect of re-exciting the scintillator thereby creating secondary scintillation radiation which does not carry any dose information.

Preferably, the beam inspection device can further comprise a Cerenkov radiation filter arranged between the ionizing radiation diffuser block, arranged between the scintillator and the imaging system, and the imaging system. Such a filter, which preferably has a spectral transmission which fits the spectral emission of the scintillator reduces even further Cerenkov light received by the camera, thereby further improving the discrimination capability of the device.

Advantageously, the imaging system can be protected against ionizing radiation using a lead shielding. Ionizing radiation reaching the camera can lead to defects in the camera, in particular in case of two dimensional CCD cameras, so called "hot pixels" can be created, thereby degrading the CCD performance. This negative effect can be limited by providing a lead shielding.

Preferably a mirror could be used to deviate the scintillation light outside of the ionizing beam field to thereby further shield the camera from ionizing radiation.

Advantageously, the beam inspection device can further comprise a second scintillator perpendicular to the first scintillator, at least one further ionizing radiation diffuser block and a second imaging system which is arranged such that, at the same time, a depth dose and a beam profile at a given depth are detectable which makes the beam detection even faster.

The invention also relates to a radiotherapy device comprising a device for discriminating Cerenkov and scintillation radiation as described above, or a beam inspection device as described above.

The invention also relates to a method for discriminating Cerenkov and scintillation radiation according to claim 12. With this method, the same advantageous effects as with the the beam inspection device can be achieved. Advantageous embodiments of the method are according to the dependent claims of claim 12.

In the following advantageous embodiments of the invention will be described by referring to the figures:
- Fig. 1-: a device for discriminating Cerenkov and scintillation radiation used in a beam inspection device according to the invention,
- Fig. 2a and 2b: illustrates an embodiment of a beam inspection device comprising a device for discriminating Cerenkov and scintillation radiation according to the invention in two different inspection modes,
- Fig. 3: illustrates the wavelength dependency of Cerenkov radiation and the transmission and emission properties of a scintillator and an anti-re-excitation filter respectively,
- Fig. 4: illustrates a depth dose profile achieved with the beam inspection device illustrated in Fig. 2a,
- Fig. 5: illustrates a beam profile at a given depth achieved with the beam inspection device illustrated in Fig. 2b,
- Fig. 6: illustrates a second embodiment of the beam inspection device according to the invention.

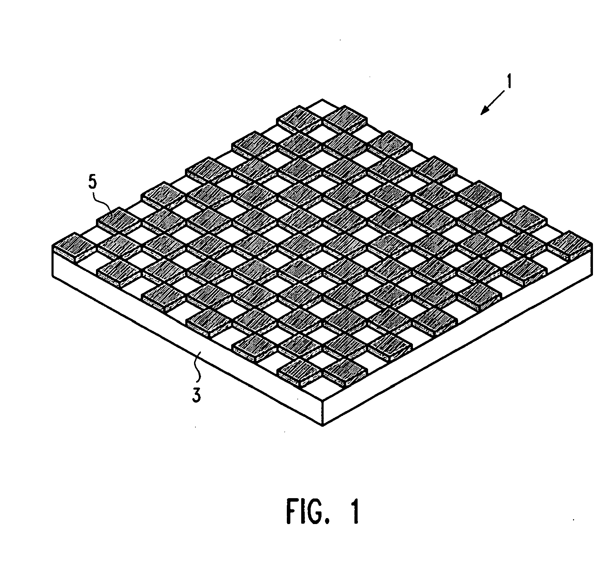

Fig. 1 illustrates a device for discriminating Cerenkov and scintillation radiation used in a beam inspection device according to the invention. It can serve for example in beam inspection devices used to adjust and control ionizing radiation beams to improve the quality of measured signals by delimiting the impact of parasitic radiation, in this case, Cerenkov radiation. Such beam inspection devices can find their application in medical equipment of radiotherapy to treat cancer.

The device for discriminating Cerenkov and scintillation radiation 1, illustrated in Fig. 1, comprises a first layer 3, which can be a plastic sheet, in particular a polystyrene or Plexiglas sheet, and a second layer 5 with a regular periodically arranged pattern. In this embodiment, the arranged pattern corresponds to a checkerboard and is made of squares, in particular black ink squares. However, the checkerboard pattern only serves as one possible example of a periodically arranged pattern, in fact any periodically arranged pattern is suitable for the invention. In addition, the ink squares could also have different forms, such as a rectangular form, thus the periodicity of the pattern does not need to be the same in the two directions of the plane of the layer.

The second layer 5 and the first layer 3 have different transmission/absorption properties so that they form first and second filters. The transmission/absorption properties of the black ink squares in the second layer 5, serving as second filters, are chosen such that they are opaque for one wavelength region and transparent for a second wavelength region, whereas the fist layer 3 serving as first filters in the regions without the black squares is transparent in both wavelength regions.

The first wavelength region corresponds to the emission spectrum of a scintillator, typically in the visible wavelength range, and the second wavelength region to the spectrum of an ionizing radiation beam, typically at higher energy than the first wavelength region. The transmission properties of the embodiment represent one possibility. In fact it is sufficient that the first and second filters realized by the first and second layer 3 and 5, represent different absorption properties with respect to the first and second wavelength region. Thus the absorption behaviors of the first filter in the first and second wavelength region is different than the absorption behaviors of the second filter in these regions, at least for one wavelength region.

A device 1 can further comprise a signal analyzing means which is configured to extract the scintillation radiation contribution out of a signal comprising scintillation and parasitic radiation such as Cerenkov radiation based on a Fourier transform algorithm. Fourier analysis becomes possible as a consequence of the periodically arranged first and second filters in the device 1. However, also other equivalent types of algorithms could be used to extract the scintillation radiation contribution.

The way the device 1 works to extract the scintillation radiation contribution will be explained in more detail in conjunction with the description of the first inventive embodiment of a beam inspection device according to the invention.

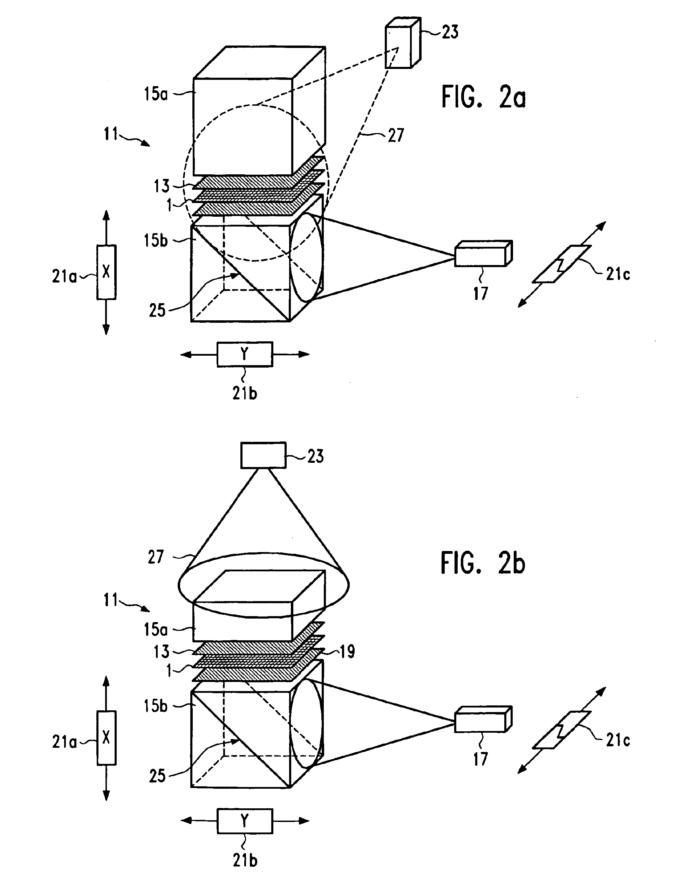

Figures 2a and 2b illustrate a beam inspection device comprising the device for discriminating Cerenkov and scintillation radiation as described above. A beam inspection device, however, is only one possible example of the use of the inventive device for discriminating Cerenkov and scintillation radiation, the advantageous properties of which could also be exploited in other devices in which radiation of one wavelength needs to be separated from a parasitic contribution.

The beam inspection device 11 is used to analyze the properties of ionizing beams used in radiotherapy. In radiotherapy, ionizing beams are used to destroy tumor cells of a patient. The beam shall, however, only destroy tumor cells and the exposure of healthy tissue needs to be minimized. To be able to precisely carry out the irradiation of tumor cells of a patient, the radiation dose distribution inside a body is therefore beforehand modeled using a beam inspection device.

The beam inspection device 11 illustrated in Fig. 2a, comprises an inspection head modeling the patient and which comprises a scintillator 13, which is a material which reacts to ionizing radiation by emitting light, and a diffuser 15a, 15b diffusing ionizing radiation. In this embodiment, the diffuser is composed of two blocks, however, it is also possible to have inspection heads with only one block or more than two blocks. Furthermore, the beam inspection device 11 comprises an imaging system 17 configured and arranged to form an image of the inspection head, in particular of the scintillator 13 and diffuser block 15b arranged between the scintillator 13 and the imaging system 17. Furthermore the beam inspection device 11 comprises the device for discriminating Cerenkov and scintillation radiation 1, as illustrated in Fig. 1 and described above, which is positioned between the scintillator 13 and the diffuser block 15b.

Optionally, according to further variants, the inspection device 11 may comprise an anti-re-excitation filter 19 positioned between the device for discriminating Cerenkov and scintillation radiation 1 and the diffuser block 15b and/or further filters.

In addition, the beam inspection device 11 can be equipped with moving means 21 a, 21 b and 21 c which allow to shift the beam inspection device 11 with respect to an ionizing radiation beam source 23, which may or may not be part of the beam inspection device 11. In this embodiment, the movements are translational, however, the moving means could be designed to provide in addition or alternatively rotational movements. The moving means allow to explore different geometries of the inspection head and thus, enable to measure the radiation dose to be deposited in a certain volume, therefore enabling 3D measurements.

Finally, in this embodiment, a mirror 25 is positioned in the diffuser block 15b to relay light coming from the scintillator 13 towards the imaging system 17.

The scintillator 13 is in the form of a solid and homogeneous plate with two opposite principal faces. The plate shaped scintillator 13 is advantageous with respect to an array of scintillator fibers each coupled to an optic fiber, as it is considerably cheaper in fabrication and furthermore, the resolution of the beam inspection device is not bound to the construction of the scintillator but essentially depends on the image of the scintillator plate provided by the imaging system 17 and on the cell size for discriminating Cerenkov and scintillator radiations.. The scintillator plate preferably has a thickness of more than 1 mm to about 5 mm with the principal faces having a surface of about 100 - 900 cm² . Here, a rectangular scintillator 13 is illustrated. However, other forms, such as round or elliptical forms are also possible to better simulate the body of a patient. The material of the scintillator 13 has the property that it scintillates when it is exposed to ionizing radiation which is the consequence of secondary electrons produced in the scintillator material. Due to this property, the scintillator 13 emits scintillation radiation, the intensity of which is proportional to the radiation dose received in each point of the plane of the scintillator, thus, a cross section of the ionizing beam along this plane. The scintillator 13 is a solid solution of luminophors (luminescent additives) in a transparent polymer such as polystyrene or PMMA.

The diffuser block 15a and 15b play the role of simulating the diffusion of the ionizing radiation by the environment of the target and thus permit to simulate a patient's body. The thickness of the diffuser blocks is chosen as a function of the importance of the diffusion phenomenon which needs to be taken into account. Typically for scintillators 13 as described above, diffuser blocks with 150 mm - 400 mm thickness are used. In this embodiment they are formed of cubes, however, their form may vary. Typically they cover all or only a part of the scintillator surfaces. To use the beam inspection device for radiotherapy purposes, the scintillator 13 and the diffuser 15a, 15b are preferably made of a material having absorption coefficients close to that of living tissue. The diffuser blocks 15a and 15b can be made out of plastic materials such as polystyrene, polyvinyltoluene or PMMA.

The imaging system 17 comprises a photon counting camera, in particular a photon counting camera or a CCD, and an objective which permits the formation of an image of the scintillator 13 and the diffuser blocks 15a 15b. The camera output signal is used to calculate the dose as a function of the light intensity in the different parts of the image, thus providing a 2D dose profile. To facilitate the imaging of the scintillator 13, the diffuser block 15b may be made of a transparent material. In this case, the scintillation radiation easily propagates through the block 15b to the camera of the imagining device 17.

The mirror 25 is provided to relay the scintillation radiation towards the camera, which has the advantage that the imaging device 17 can be shielded from the ionizing radiation beam. In this embodiment, the relay mirror 25 is inserted inside the diffuser block 15b, but according to a variant, it could also be placed separately, outside the diffuser block 15b. Typically, the mirror is a reflective metallic coating which is deposited on a diagonal section of the cube 15b.

To even further protect the camera from harmful ionizing radiation which could lead to hot pixels in the camera, the imaging system 17 may be protected by a lead shielding, the design of which is the result of calculations and simulations.

The extraction of the scintillation radiation using the device for discriminating Cerenkov and scintillation radiation 1 according to the first embodiment of the invention will now be described in detail.

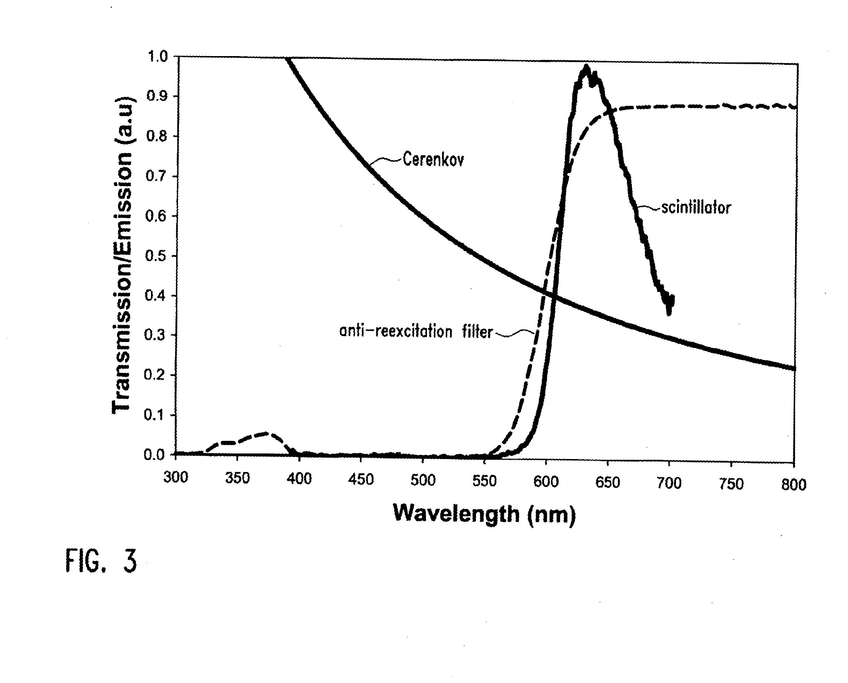

The diffuser block 15b, when subjected to the ionizing radiation beam, illustrated by cone 27 in Fig. 2a, can lead to the creation of parasitic radiation, the so called Cerenkov radiation. The Cerenkov radiation is associated with charged atomic particles moving at velocities higher than the speed of light in the local medium. The effect occurs in the scintillator 13 but also and to a larger extent in the diffuser blocks 15a and 15b due to their greater thickness. Fig. 3 illustrates the emission of Cerenkov radiation as a function of wavelength and illustrates the inverse wavelength to the square dependency of the radiation. The Cerenkov radiation is thus emitted at all frequencies in the visible range, when it occurs in an optically transparent medium, which is the case for the described diffuser block, and, furthermore, emits under all angles.

The Cerenkov radiation created adds to the scintillation radiation and therefore falsifies the calculation of the actual radiation dose deposited by the ionizing beam 27 in the scintillator 13, as the imaging device 17 measures the sum of the two contributions. The use of the inventive Cerenkov and scintillation and radiation discriminating device 1 allows to remove the Cerenkov light contribution from the signal measured by the imaging device 17 and to thereby calculate the actual radiation dose received by the scintillator 13. By providing the checkerboard between the scintillator 13 and the diffuser block 15b situated towards the camera, the image captured by the imaging system 17 is the image of the scintillator 13 seen through the device 1. Recalling the properties of the discrimination device 1, namely that the second filters, represented by the second layer 5, are transparent to the ionizing radiation only and that the first filters, represented by the first layer 3, are transparent to both the scintillator radiation and the ionizing radiation, each point of the image which corresponds to the position of a black square of layer 5 will, thus, only have one contribution, namely the Cerenkov radiation created by the ionizing radiation beam, whereas positions corresponding to the first filter positions will represent two contributions, namely the scintillation radiation and the parasitic Cerenkov radiation.

Due to the periodic arrangement of the first and second filters, the image captured by the imaging system 17 carries the information concerning the spurious Cerenkov radiation. Therefore, when processing the signal received from the camera using, for example, Fourier transformation algorithms, the amplitude of the signal modulation between black and "white" squares can be deduced for each point of the image. The amplitude of this modulation is the response to the scintillation light intensity cleared from the Cerenkov contribution. Thus, the Cerenkov and scintillation radiation discrimination device allows the improvement of the radiation dose determination in a two-dimensional manner. To do so the beam inspection device 11 or the device 1 comprises a calculation unit (not illustrated).

The beam inspection device 11 can be further improved by optional additional features and / or elements according to further inventive embodiments.

First of all, the scintillator material can be chosen such that the scintillation radiation is in a region of relatively high wavelength compared to the Cerenkov radiation to limit the impact of any Cerenkov radiation on the scintillator radiation. Fig. 3 illustrating the Cerenkov radiation dependency, furthermore illustrates a typical scintillator emission which depends on the scintillator material.

Cerenkov light produced in the diffuser blocks is, as already mentioned, emitted in all directions and, thus, can partly reach the scintillator 13, either from block 15a or from block 15b, and can have the effect of re-exciting the scintillator 13, thereby leading to a secondary scintillation radiation emission, which does not create any further information about the radiation dose received by the scintillator 13 from the ionizing radiation beam. This secondary scintillation emission thus needs to be filtered out or needs to be prevented. Thus, according to a further variant, the scintillator plate surface facing the diffuser block 15a can be painted in black so that Cerenkov light produced in this diffuser block 15a is blocked and cannot reach the scintillator 13, whereas the ionizing radiation can still reach the scintillator 13.

According to a further variant, the additional anti-re-excitation filter 19, for example a gelatin filter, can be inserted between the scintillator 13 and the diffuser block 15b situated towards the imaging system 17. The absorption properties of this filter 19 are chosen such that Cerenkov light coming backwards from the diffuser block 15b is absorbed so that a re-excitation of the scintillator 13 can be prevented. The absorption properties of the filter 19 shall be chosen such that a maximum of Cerenkov radiation will be absorbed, in particular, high energy Cerenkov radiation, while only a minimum of scintillation radiation is absorbed. This is further illustrated in Fig. 3 which, in addition to the Cerenkov radiation properties and the scintillator radiation properties, also illustrates the transmission properties of a suitable anti-re-excitation filter 19, blocking off high energy Cerenkov radiation.

Yet another variant consists in providing an additional filter arranged between the diffuser block 15b and the imaging system 17 and which in turn also shall fit the spectral emission of the scintillator to reduce the Cerenkov parasitic contribution to the signal. This additional filter is not illustrated in the figures.

The beam inspection device or the device for discriminating Cerenkov and scintillation radiation furthermore comprises the calculation unit designed to carry out the Fourier transformation algorithm on the signal and which, furthermore, may be designed to display the images. This calculation unit can, furthermore, be configured to drive the moving means 21 a, 21 b and 21 c to allow the computation of the radiation dose of the ionizing beam in three dimensions.

Finally, all parts of the beam inspection device, except the ones which shall transmit scintillation radiation can be painted in matte black in order to reduce parasitic reflections. The optical index of the black paint can also be selected to match the index of polystyrene in order to minimize the parasitic reflections.

The above described variants to the inventive embodiment of the beam inspection device can, of course, be combined in any combination.

The beam inspection device 11 undergoes the following calibration procedure before dose information can be obtained. First, the optical response of the device 11 needs to be determined. The optical response depends primarily on the quality of the imaging system 17 and, in particular, its optics, and secondarily, on the response of the different filters 19, the scintillator 13, the discriminating device 1, the diffuser blocks 15a, 15b, and the deformation possibly introduced by the mirror 25. Thereto, the inspection head is illuminated with a uniform beam field. In case linear accelerators are employed, which are typically used in radiotherapy, the ionizing beam source to be examined can be directly used to calibrate the beam inspection device 11, as an accelerator can produce large beam fields with sizes of 30 x 30 cm being uniform within a few percent. The calibration images are then used to subsequently correct acquisitions representing the dose distribution of the examined beam. It is sufficient to carry out this calibration step only once for a given beam inspection device.

To be capable of providing absolute dose measurements, the beam inspection device 11 has then to be calibrated to absolute values. This is done by using one or several calibration ionisation chambers known in the art, which are small sized chambers which can be placed in the scintillator 13 or in its direct neighborhood. The calibration occurs by adjustment of the radiation dose value obtained from the scintillator image for one or several areas corresponding to ionisation chambers places to the dose values provided by the ionization chambers. Once calibrated, the device 11 will be able to provide absolute values of the radiation dose deposited by an ionizing radiation beam. Again, this calibration needs to be carried out only once for a given beam inspection device.

In the arrangement of Fig. 2a, the ionizing radiation beam 27 is positioned perpendicular to the normal of the plane of the scintillator 13. In this configuration, the image of the scintillator plate captured by the camera corresponds to a transverse section of the inspection head which simulates a patient lying horizontally and being irradiated vertically. The cross-section of the scintillator plate image along the Z-axis represents the depth dose distribution at a given distance from the ionizing beam and the cross-section along the Y-axis represents a cross-section of the beam profile at a given depth (Z-position). Using the moving means along the Z-axis allows to adjust the source skin distance, which is the distance measured along the central ray from the center of the front surface of the radiation source 23 to the surface of the irradiated inspection head, simulating the patient.

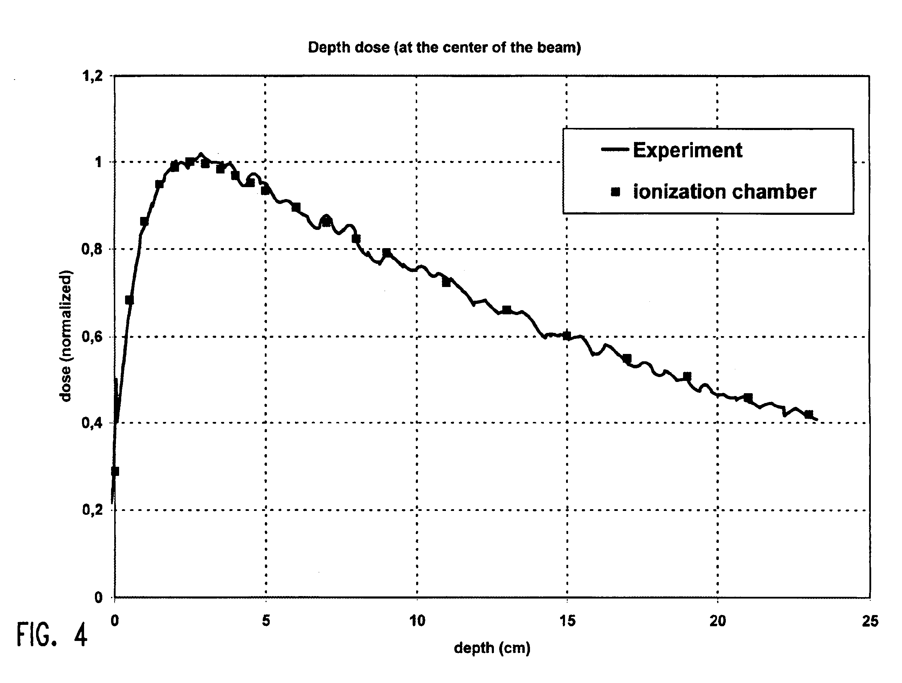

Fig. 4 illustrates such a depth dose profile at the center of the beam field which can be achieved by the beam inspection device 11 according to the invention (solid lines). This depth dose profile is compared with a result of a depth dose measurement performed with ionising chambers under the same conditions. As the ionization chambers do not suffer from the parasitic Cerenkov contribution, one can realize that measurements obtained with the inventive beam inspection device correspond (within +/- 2%) to the ones obtained with the ionisation chambers.

In Fig. 2b, representing a beam inspection device 11 as already described with respect to Fig. 2a, the ionizing beam emitted from the source 23 is parallel to the normal of the scintillator 13. In this configuration, the scintillator image provides the beam profile at a given depth. This configuration is equivalent to a longitudinal section of the inspection head simulating the irradiated patient lying horizontally and being irradiated vertically. The depth depends on the source skin distance or the source detector distance, which is the distance measured along the central ray from the center front surface 23 to the active surface of the detector of the imaging system 17. This distance can be adjusted with the help of the moving means along the X-axis, wherein furthermore, the thickness of the diffuser block situated between the detector and the source also needs to be varied in order to simulate the required depth while remaining tissue equivalent.

In this configuration the advantageous role of mirror 25 becomes evident, as without the mirror 25 the imaging system 17 would be in the propagation direction of beam 27.

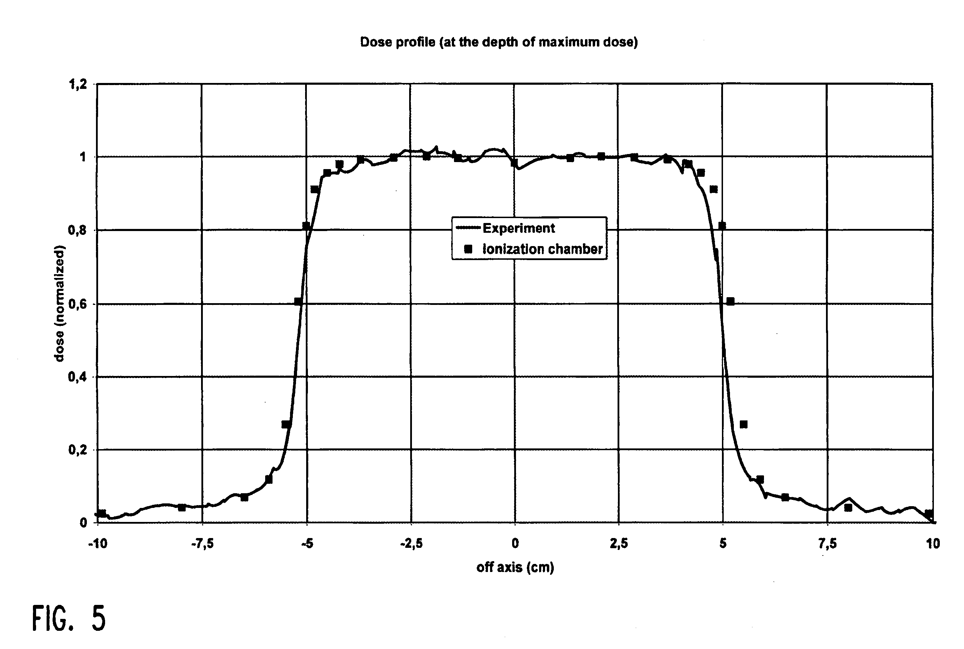

Fig. 5 shows a corresponding beam profile at the depth of maximum dose again compared to the measurements performed with an ionisation chamber under the same conditions. Again, both measurements match each other. In both cases, by moving the device along the X-axis, a stack of images can be acquired and subsequently be used to construct a 3D topography of the dose deposited by the ionizing beam in the inspection head simulating a patient.

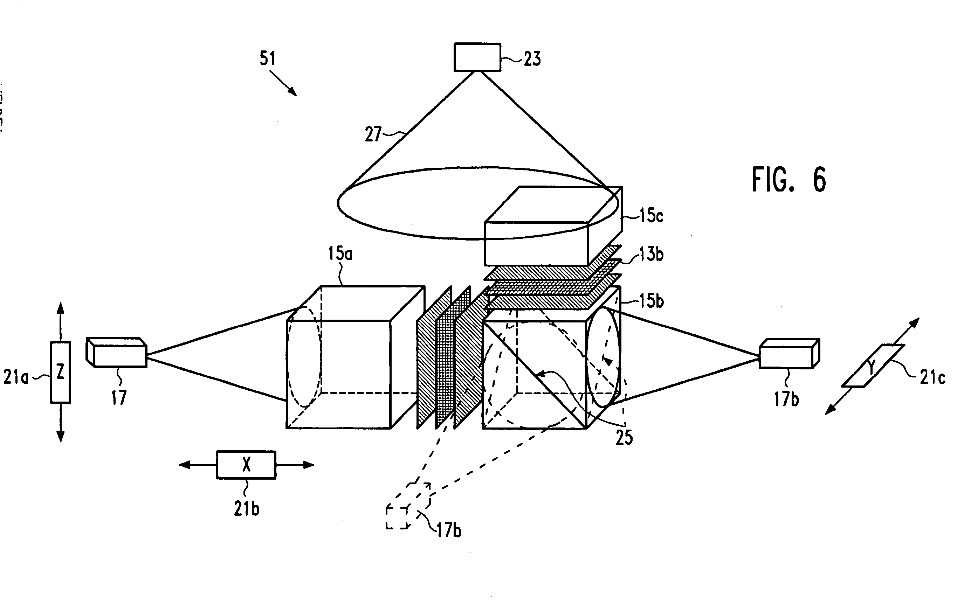

Fig. 6 illustrates a second inventive embodiment concerning the beam inspection device which is a hybrid of the two setups illustrated in Figs. 2a and 2b. This configuration allows to acquire at the same time an image representing a transverse section (Y, Z axis) and another representing a longitudinal section (X, Y axis) of an irradiated inspection head representing a patient lying horizontally and being irradiated vertically. Thus, at the same time, the depth dose and the profile of the ionizing radiation beam can be analyzed. Elements having the same reference numerals as in Fig. 2a will not be explained in detail again, but their description is incorporated herewith by reference.

The beam inspection device according to the second embodiment comprises a first scintillator 13 positioned vertically between two diffuser blocks 15a and 15b. The scintillator 13 is irradiated vertically by the ionizing radiation beam 27 and its image is captured by a first imaging device 17 positioned on the same axis as the normal of the plane of the first scintillator 13. With this part of the device, the depth dose distribution of the ionizing beam can be determined (see Fig. 4).

A second scintillator 13b having the same properties as the first scintillator, except potentially for its size, is positioned horizontally on top of diffuser block 15b situated on the opposite side from the first imaging device 17 and a third diffuser block 15c is placed on top of the second scintillator 13b. The thickness of the third diffuser block 15c is adjusted to simulate the required depth. The image of the second scintillator 13b, is then relayed by a mirror 25 to a second imaging device 17b, which can be placed on the same axis as the first imaging system, or, according to a variant, being placed perpendicular to it, see dotted lines. The position of the mirror 25 inserted in this embodiment in the diffuser block 15c depends on the positioning of the second imaging device 17b. The image obtained with the second imaging system 17b then renders the profile of the examined ionizing radiation beam (corresponding to Fig. 5).

The beam inspection device 11 according to the above-described embodiment can also be integrally part of a radiotherapy deice. However, the application of the Cerenkov and scintillation discriminating device 11 is not exclusively linked to the application to radiotherapy, but the device itself can also be used in other applications.

## Claims

1. Beam inspection device, comprising:
an inspection head comprising a scintillator (13) and at least one ionizing radiation diffuser block (15a, 15b),
an imaging system (17) for forming an image from at least a part of the inspection head,
**characterized in comprising**
a Cerenkov and scintillation radiation discriminating device (1),
comprising arranged first and second filters (3, 5), having different relative absorption properties with respect to scintillation radiation and ionizing radiation, wherein
the first and second filters (3,5) are arranged periodically, such that the spatially modulated amplitude obtained is exploitable to extract the scintillation radiation, when Cerenkov radiation is created as a consequence of the ionizing radiation having passed the first and second filters (3, 5), wherein
the first filters (3) are transparent and the second filters (5) opaque to scintillation radiation, wherein
the first and second filters (3, 5) are transparent to ionizing radiation, and wherein
the Cerenkov and scintillation radiation discriminating device (1) is positioned between the scintillator (13) and the imaging system (17).

2. Beam inspection device according to one of claim 1, wherein the first and second filters (3, 5) are arranged in the form of a checkerboard.

3. Beam inspection device according to one of claims 1 or 2, comprising a first layer (3), in particular a plastic sheet, more in particular a polystyrene or Plexiglas sheet, and a second layer (5), wherein the second layer comprises regions forming the second filters.

4. Beam inspection device according to claim 3, wherein the regions are square formed.

5. Beam inspection device according to one of claims 1 to 4 further comprising a signal analyzing means configured to extract the scintillation radiation contribution out of a signal comprising scintillation and Cerenkov radiation, in particular based on a Fourier transform algorithm.

6. Beam inspection device according to one of claims 1 to 5, wherein the Cerenkov and scintillation radiation discriminating device is positioned between the scintillator (13) and a ionizing radiation diffuser block (15b), arranged between the scintillator (13) and the imaging system (17).

7. Beam inspection device according to one of claims 1 to 6, further comprising an antire-excitation filter (19) between the scintillator (13) and the ionizing radiation diffuser block (15b), arranged between the scintillator (13) and the imaging system (17), and configured to absorb at least partially Cerenkov radiation generated in the diffuser block (15b).

8. Beam inspection device according to one of claims 1 to 7, further comprising a Cerenkov radiation filter arranged between the ionizing radiation diffuser block (15b), arranged between the scintillator (13) and the imaging system (17), and the imaging system (17).

9. Beam inspection device according to one of claims 1 to 8, wherein the imaging system (17) is protected against ionizing radiation using a lead shielding.

10. Beam inspection device according to one of claims 1 to 9, comprising a second scintillator (13b) perpendicular to the first scintillator (13), at least one further ionizing radiation diffuser block (15c), and a second imaging system (17b) which are arranged such that at the same time a depth dose profile and a beam profile at a given depth is detectable.

11. Radiotherapy device comprising a beam inspection device according to one of claims 1 to 10.

12. Method for discriminating Cerenkov and scintillation radiation using a beam inspection device according to one of claims 1 to 10, comprising the steps of:
a) providing radiation comprising ionizing and scintillation radiation,
b) measuring the transmitted radiation having passed through the first and second filters (3, 5) comprising scintillation and Cerenkov radiation which is created as a consequence of the ionizing radiation having passed the first and second filters, and
c) processing the measured signal to extract the scintillation radiation based on the spatially modulated amplitude of the transmitted radiation.

13. Method according to claim 12, wherein step c) comprises processing based on Fourier transformation.

14. Method according to claim 12 or 13, wherein step b) comprises providing a two dimensional image of the transmitted radiation and step c) comprises extracting the scintillation radiation at each point of the image.

## Patentansprüche

1. Strahlprüfvorrichtung, umfassend:
einen Prüfkopf, der einen Szintillator (13) und wenigstens einen Diffusorblock (15a, 15b) für ionisierende Strahlung umfasst,
ein Abbildungssystem (17) zum Erstellen eines Bildes von wenigstens einem Teil des Prüfkopfes,
**dadurch gekennzeichnet, dass** sie umfasst:
eine Cerenkov- und Szintillationsstrahlungsunterscheidungsvorrichtung (1),
die angeordnete erste und zweite Filter (3, 5) mit unterschiedlichen relativen Absorptionseigenschaften in Bezug auf Szintillationsstrahlung und ionisierende Strahlung aufweist, wobei
die ersten und zweiten Filter (3, 5) derart periodisch angeordnet sind, dass die erhaltene räumlich modulierte Amplitude zur Extraktion der Szintillationsstrahlung auswertbar ist, wenn Cerenkov-Strahlung als Folge dessen erzeugt wird, dass die ionisierende Strahlung die ersten und zweiten Filter (3, 5) durchlaufen hat, wobei die ersten Filter (3) transparent und die zweiten Filter (5) opak gegenüber Szintillationsstrahlung sind, wobei
die ersten und zweiten Filter (3, 5) transparent gegenüber ionisierender Strahlung sind und wobei
die Cerenkov- und Szintillationsstrahlungsunterscheidungsvorrichtung (1) zwischen dem Szintillator (13) und dem Abbildungssystem (17) positioniert ist.

2. Strahlprüfvorrichtung nach Anspruch 1, wobei die ersten und zweiten Filter (3, 5) in Form eines Schachbrettes vorliegen.

3. Strahlprüfvorrichtung nach einem der Ansprüche 1 oder 2, umfassend eine erste Schicht (3), bevorzugt eine Kunststofflage, besonders bevorzugt eine Polystyrol- oder Plexiglaslage, und eine zweite Schicht (5), wobei die zweite Schicht Bereiche zur Bildung der zweiten Filter umfasst.

4. Strahlprüfvorrichtung nach Anspruch 3, wobei die Bereiche quadratisch ausgebildet sind.

5. Strahlprüfvorrichtung nach einem der Ansprüche 1 bis 4, des Weiteren umfassend ein Signalanalysemittel mit einer Ausgestaltung zur Extraktion des Szintillationsstrahlungsanteiles aus einem Szintillations- und Cerenkov-Strahlung umfassenden Signal bevorzugt auf Grundlage eines Fourier-Transformationsalgorithmus.

6. Strahlprüfvorrichtung nach einem der Ansprüche 1 bis 5, wobei die Cerenkov- und Szintillationsstrahlungsunterscheidungsvorrichtung zwischen dem Szintillator (13) und einem Diffusorblock (15b) für ionisierende Strahlung mit einer Anordnung zwischen dem Szintillator (13) und dem Abbildungssystem (17) positioniert ist.

7. Strahlprüfvorrichtung nach einem der Ansprüche 1 bis 6, des Weiteren umfassend einen wiederanregungshemmenden Filter (19) zwischen dem Szintillator (13) und dem Diffusorblock (15b) für ionisierende Strahlung mit einer Anordnung zwischen dem Szintillator (13) und dem Abbildungssystem (17) und einer Ausgestaltung zur wenigstens teilweise erfolgenden Absorption von in dem Diffusorblock (15b) erzeugter Cerenkov-Strahlung.

8. Strahlprüfvorrichtung nach einem der Ansprüche 1 bis 7, des Weiteren umfassend einen Cerenkov-Strahlungsfilter mit einer Anordnung zwischen dem Diffusorblock (15b) für ionisierende Strahlung, der zwischen dem Szintillator (13) und dem Abbildungssystem (17) angeordnet ist, und dem Abbildungssystem (17).

9. Strahlprüfvorrichtung nach einem der Ansprüche 1 bis 8, wobei das Abbildungssystem (17) gegen ionisierende Strahlung durch Verwendung einer Bleiabschirmung geschützt ist.

10. Strahlprüfvorrichtung nach einem der Ansprüche 1 bis 9, umfassend einen zweiten Szintillator (13b) senkrecht zu dem ersten Szintillator (13), wenigstens einen weiteren Diffusorblock (15c) für ionisierende Strahlung und ein zweites Abbildungssystem (17b), die derart angeordnet sind, dass gleichzeitig ein Tiefendosisprofil und ein Strahlprofil bei einer gegebenen Tiefe erfassbar sind.

11. Radiotherapievorrichtung, umfassend eine Strahlprüfvorrichtung nach einem der Ansprüche 1 bis 10.

12. Verfahren zum Unterscheiden von Cerenkov- und Szintillationsstrahlung unter Verwendung einer Strahlprüfvorrichtung nach einem der Ansprüche 1 bis 10, umfassend die nachfolgenden Schritte:
(a) Bereitstellen von Strahlung, die ionisierende und Szintillationsstrahlung umfasst,
(b) Messen der Strahlung, die die ersten und zweiten Filter (3, 5) durchlaufen hat und die Szintillations- und Cerenkov-Strahlung umfasst, die als Folge dessen erzeugt wird, dass die ionisierende Strahlung die ersten und zweiten Filter durchlaufen hat, und
(c) Verarbeiten des gemessenen Signals zur Extraktion der Szintillationsstrahlung auf Grundlage der räumlich modulierten Amplitude der übertragenen Strahlung.

13. Verfahren nach Anspruch 12, wobei Schritt (c) eine Verarbeitung auf Grundlage einer Fourier-Transformation umfasst.

14. Verfahren nach Anspruch 12 oder 13, wobei Schritt (b) ein Bereitstellen eines zweidimensionalen Bildes der übertragenen Strahlung umfasst und Schritt (c) ein Extrahieren der Szintillationsstrahlung an jedem Punkt des Bildes umfasst.

## Revendications

1. Appareil d'inspection de faisceau comprenant :
une tête d'inspection comprenant un scintillateur (13) et au moins un bloc diffuseur de rayonnement ionisant (15a, 15b),
un système d'imagerie (17) pour former une image à partir d'une partie au moins de la tête d'inspection,
**caractérisé par le fait qu'il comprend**
un appareil de distinction des rayonnements de Cerenkov des rayonnements de scintillation (1),
comprenant des premiers et seconds filtres installés (3, 5), présentant des propriétés d'absorption relative différentes quant au rayonnement de scintillation et au rayonnement ionisant, où
les premiers et seconds filtres (3,5) sont installés périodiquement, de manière à ce que l'amplitude modulée spatialement obtenue soit exploitable pour extraire le rayonnement de scintillation, lorsque le rayonnement de Cerenkov est créé comme conséquence du rayonnement ionisant passé à travers les premiers et seconds filtres (3,5), où
les premiers filtres (3) sont transparents et les seconds filtres (5) opaques par rapport au rayonnement de scintillation, où
les premiers et seconds filtres (3, 5) sont transparents par rapport au rayonnement ionisant, et où
l'appareil de distinction des rayonnements de Cerenkov des rayonnement de scintillation (1) est positionné entre le scintillateur (13) et le système d'imagerie (17).

2. L'appareil d'inspection de faisceau selon la revendication 1, dans lequel les premiers et second filtres (3, 5) sont installés en forme d'échiquier.

3. L'appareil d'inspection de faisceau selon l'une des revendications 1 ou 2, comprenant une première couche (3), en particulier une feuille de plastique, plus particulièrement une feuille de polystyrène ou de plexiglas, et une deuxième couche (5), où la deuxième couche comprend des régions formant les seconds filtres.

4. L'appareil d'inspection de faisceau selon la revendication 3, où les régions ont une forme carrée.

5. L'appareil d'inspection de faisceau selon l'une des revendications 1 à 4 comprenant en outre un moyen d'analyse de signal configuré pour extraire la contribution du rayonnement de scintillation d'un signal comprenant des rayonnements de scintillation et de Cerenkov, basé en particulier sur un algorithme de transformation de Fourier.

6. L'appareil d'inspection de faisceau selon les revendications 1 à 5, dans lequel l'appareil de distinction des rayonnements de Cerenkov des rayonnements de scintillation est positionné entre le scintillateur (13) et un bloc diffuseur de rayonnement ionisant (15b), installé entre le scintillateur (13) et le système d'imagerie (17).

7. L'appareil d'inspection de faisceau selon les revendications 1 à 6, comprenant en outre un filtre d'anti-ré-excitation (19) entre le scintillateur (13) et le bloc diffuseur de rayonnement ionisant (15b), installé entre le scintillateur (13) et le système d'imagerie (17), et configuré pour absorber au moins partiellement le rayonnement de Cerenkov généré dans le bloc diffuseur (15b).

8. L'appareil d'inspection de faisceau selon les revendications 1 à 7, comprenant en outre un filtre de rayonnement de Cerenkov installé entre le bloc diffuseur de rayonnement ionisant (15b), installé entre le scintillateur (13) et le système d'imagerie (17), et le système d'imagerie (17).

9. L'appareil d'inspection de faisceau selon les revendications 1 à 8, dans lequel le système d'imagerie (17) est protégé contre le rayonnement ionisant utilisant un bouclier de plomb.

10. L'appareil d'inspection de faisceau selon les revendications 1 à 9, comprenant un second scintillateur (13b) perpendiculaire au premier scintillateur (13), au moins un autre bloc diffuseur de rayonnement ionisant (15c), et un second système d'imagerie (17b) qui sont installés de manière telle qu'au même moment, un profil de dose en profondeur et un profil de faisceau à une profondeur donnée soient identifiables.

11. Appareil de radiothérapie comprenant un appareil d'inspection de faisceau selon l'une des revendications 1 à 10.

12. Procédé de discrimination de rayonnements de Cerenkov de rayonnements de scintillation utilisant un appareil d'inspection de faisceau selon les revendications 1 à 10, comprenant les étapes de :
a) mise à disposition de rayonnement comprenant des rayonnements de scintillation et ionisants,
b) mesure du rayonnement transmis qui est passé par les premiers et second filtres (3, 5), et comprenant les rayonnements de scintillation et de Cerenkov créés comme conséquence du rayonnement ionisant passé par les premiers et deuxièmes filtres, et
c) traitement du signal mesuré pour extraire le rayonnement de scintillation basé sur l'amplitude modulée spatialement du rayonnement transmis.

13. Procédé selon la revendication 12, dans lequel l'étape c) comprend le traitement basé sur la transformation de Fourier.

14. Procédé selon les revendications 12 ou 13, dans lequel l'étape b) comprend la mise à disposition d'une image bidimensionnelle du rayonnement transmis et l'étape c) comprend l'extraction du rayonnement de scintillation à chaque point de l'image.
